# EUROPEAN PATENT SPECIFICATION

(11) **EP 1 690 430 B1**
(45) Date of publication and mention of the grant of the patent: **11.02.2009**
(21) Application number: 04803173.6
(22) Date of filing: 19.11.2004
(51) Int. Cl.: H04W 8/24

(54) **FLEXIBLE MESSAGING SYSTEM**
FLEXIBLES NACHRICHTENÜBERMITTLUNGSSYSTEM
SYSTEME DE MESSAGERIE SOUPLE

(30) Priority: 26.11.2003 US 724569
(43) Date of publication of application: 16.08.2006
(73) Proprietor: Nokia Corporation, 02150 Espoo (FI)
(72) Inventor: ENGELS, Ralf, 89160 Dornstadt (DE)
(74) Representative: van Walstijn, Bartholomeus G. G.
(86) International application number: PCT/EP2004/013101
(87) International publication number: WO 2005/053335

(56) References cited:
- EP-A- 1 143 688
- WO-A-98/34422
- US-A1- 2002 123 335
- US-A1- 2002 138 545
- SONERA MEDIALAB: "Mobile Java Application Development White Paper" [Online] 12 September 2002 (2002-09-12), , XP002320888 Retrieved from the Internet: URL:http://www.medialab.sonera.fi/workspac e/MobileJavaAppDevelopment.pdf> [retrieved on 2005-03-10] Chapters 1 and 2

## Description

The present invention relates to the use of messaging for sending and receiving various items in a wireless communication network.

### BACKGROUND ART

Smart Messaging is a concept developed by Nokia for sending and receiving ring tones, picture messages, operator logos, business cards, calendar requests, and Internet settings over the Short Message Service (SMS). Since its introduction in 1997, Smart Messaging has become an extremely popular terminal-specific content delivery technology and the de facto standard for the industry. Examples of different SMS type messages are: Business Card format, Calendar format, Ringing tone format, OTA Bitmap format, CLI Icon format, Operator logo format, Picture Message format and Downloadable Profile message format. There are advanced message types that allow e.g. a network operator to send a complex set of configuration information like "GPRS settings" to a mobile phone. The software on the phones presently on the market is programmed to handle, on average, about 6 to 8 of these different message types. The message types that a phone can handle is determined by the manufacturer, depending on the target customer group, since it is not realistic to attempt to provide a phone that can handle all available message types.

WO 98/34422 discloses a method of handling incoming SMS messages. If it is a normal SMS message the normal SMS application is started. If the message is of a special type, the description of the message is parsed for an application identifier and it is verified if the terminal knows the application concerned. The application is started if known to the terminal. If the application is not known to the terminal the message is presented.

The white paper "Mobile Java Application Development" published by Sonora Medialab on September 12, 2002 discloses the use of a virtual machine on a mobile terminal for running applications in platform independent format and discusses the know-how required for developing applications for MIDP version 1.0.

There is presently a fast increase in the number of applications for mobile phones, such as e.g. background images, screen savers, location based services, financial services, operator controlled updating or settings/phonebook contents, etc. that have created a need to increase in the number of message types. It is however problematical to harmonize these message types between the different phone manufacturers, despite the dominance of the Nokia Smart Messaging Concept. The present SMS standard may be augmented as described below to provide for more flexible handling of increasing demand.

Accordingly, a need exists for a universal messaging system for wireless networks that can handle a great variety of different content.

### DISCLOSURE OF THE INVENTION

The devices and method described below provide for a method of handling incoming messages received on a mobile communication terminal via a wireless network, the terminal having native software and a virtual machine capable of executing applications in platform independent object code. The method comprises the step of receiving and storing a message that comprises a header and a message body. The header contains an identifier for an application in platform independent object code to be executed by the virtual machine. In the next step it is verified if the identified application is available on the terminal, and the identified application is started when available on the terminal.

Thus, the terminal is able to automatically start the application required for using the data in the message body of a received message, regardless of the type and version of the native software of the terminal unless the required application is not available on the terminal. Therefore, the header may further contain an address at which the identified application can be downloaded from a server that is accessible through the wireless network, and the method further comprises the steps of connecting to the terminal to the server at the address contained in the header, downloading the identified application when the identified application was not available on the terminal, and starting the identified application when downloaded.

Thus, the required application can automatically be downloaded if it is not already available on the terminal. Since the application is in platform independent object code, there is no platform compatibility problems, and because the download address is contained in the header the user does not need to search for it.

Preferably, the message body contains data to be used by the identified application.

The platform independent object code can be Java^{™}, in particular Java^{™} 2 Platform, Micro Edition (J2METM) from Sun Microsystems Inc. but other platform independent object codes can be used.

The virtual machine preferably is a K Virtual Machine^{™} (KVM). The identified application can be a Java^{™} application, a Java^{™} applet or a Java^{™} MIDlet.

The devices and method described below provide for a mobile communication terminal that can operate with a flexible messaging concept for a wireless network.
This terminal has native software and a virtual machine. The virtual machine is capable of executing applications in platform independent object code. The terminal also has a message handling application in the native software or in an application run by the virtual machine. The message handling application is capable of sending and receiving messages via the wireless network, and the message handling application is programmed to start an application written in the independent object code when a corresponding identifier is contained the header of a received message.

Thus, the terminal is able to automatically start the application required for using the data in the message body of a received message, regardless of the type and version of the native software of the terminal if the required application is available on the terminal.

The message handling application can also be programmed to download the identified application from a server that is accessible via the wireless network at an address contained in the header when the identified application is not already available on the terminal.

The message handling application is programmed to verify the certification of the downloaded application.

The mobile communication terminal may further comprise an application identifier database listing the identifiers of all the applications in platform independent object code that are available on the terminal.

The message to be used with a flexible messaging concept for mobile terminals that operate on a wireless network is describe in detail below, and provides a format suitable for transmission through a wireless network to a mobile communication terminal, the terminal having native software and an virtual machine capable of handling platform independent object code and the message having a syntax comprising a header part and message body part. The header contains an identifier for an application in platform independent object code to be executed by the virtual machine in the mobile communication terminal that receives the message.

Preferably, the header includes an address at which the identified application can be downloaded from a server that is accessible through the wireless network. The message body may contain data to be used by the identified application.

The message header may include a URI that serves as identifier and contains the address at which the identified application can be downloaded from a server.

The message can be an SMS message with a port address in octets 4-5 that identifies it as a message containing an identifier for an application in platform independent object code to be started upon receipt of the message. The identified application can be a Java^{™} applet or MIDlet, preferably in the Java^{™} 2, Micro Edition, Mobile Information Device Profile (MIDP) format.

The message may also contain a signed certificate issued by a recognized certification authority and including a public key from the signatory. In addition, the message may include field communication of an unique sender identifier in the form of a telephone number of an originating mobile phone, or other unique identifier for mobile terminals and/or computers.

On this background, it is an object of the present invention to provide.

With the system described herein, a flexible messaging method for mobile terminals that operate on a wireless network achieved by providing a method of enabling an application in platform independent object code to be run on a mobile communication terminal comprising the steps of sending a message from a server via the wireless network to a mobile communication terminal, the terminal being provided with a virtual machine capable of executing applications in platform independent object code. The message contains a header with an identifier for the application to be started on the mobile communication terminal and a message body with the data to be used by the identified application.

Thus, the system and methods described herein make it possible to send a message with data to be used by a specific application to a mobile communication terminal, without needing to know first which platform is installed in the terminal.

The message header may further contain an address at which the identified application can be obtained from a server that is accessible through the wireless network, and thus the method may further comprise the step of uploading the identified application to the mobile communication terminal when the mobile terminal connects to the server at the address in the header.

Thus, it is rendered possible to transfer an application to a mobile terminal without being required to know the platform installed on the terminal. There is also no risk of installing the application twice on the same terminal.

Further objects, features, advantages and properties of the flexible messaging system according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 shows the architecture of a wireless cellular communication network for use with the present invention,
Fig. 2 shows a mobile phone in accordance with the present invention,
Fig. 3 is a block diagram showing the basic components of the mobile phone of Fig. 2,
Fig. 4 shows the software architecture of the mobile phone of Fig. 2,
Fig. 5 is a flowchart illustrating the message handling procedure according to a preferred embodiment of the present invention,
Fig. 6 shows a sequence diagram of an example of the use of the flexible messaging system according to the invention, and
Fig. 7 shows a sequence diagram of a further example of the use of the flexible messaging system according to the invention.

### DETAILED DESCRIPTION

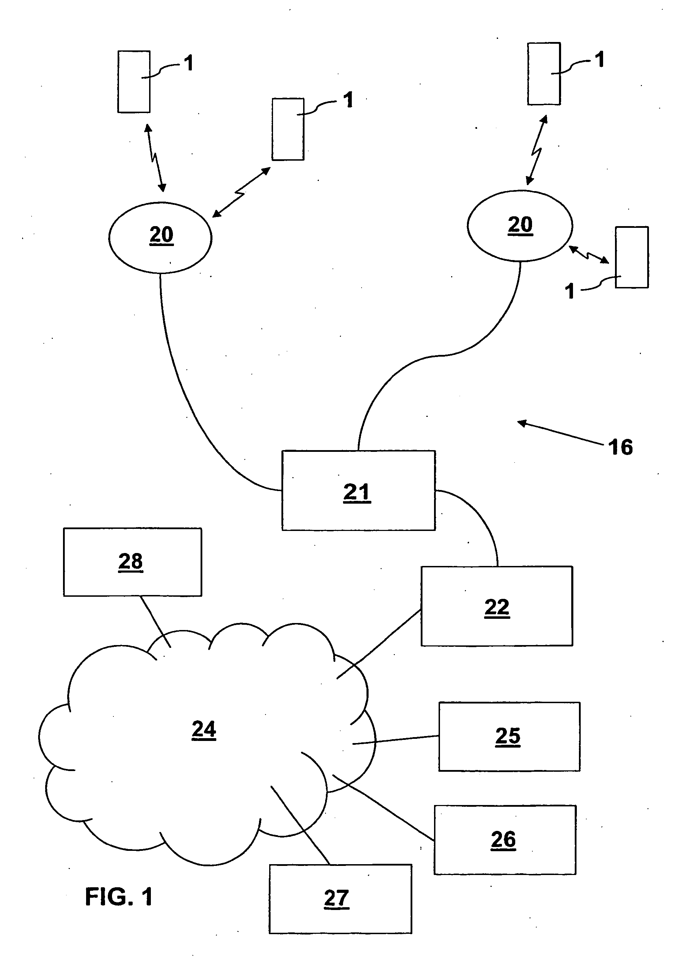

Fig. 1 illustrates a network architecture for use with the present invention. The telecommunication system includes a wireless cellular network 16 and a data network 24. The wireless cellular network 16 can be implemented in a conventional wireless cellular telephone network that has been enhanced to carry data. A wireless network capable of carrying circuit-switched data can be used for this purpose. More preferably, however, the wireless cellular network provides a packet-switched data service. An example of a wireless infrastructure includes UMTS (Universal Mobile Telephone System), a 3^{rd} Generation wireless system based on GSM (Global System for Mobile communications). GSM adds a packet network overlay known as GRPS (GSM Packet Radio Service) to a wireless circuit voice network. The data network can e.g. be the Internet.

The cellular network comprises a large number of base stations 20 (only two are shown) that are provided with a transceiver for handling mobile phone communications. The base stations 20 are connected to a mobile switching centre 21. Each of the base stations 20 has its own control channel frequency (control channel frequencies can be reused for distant cells).

The base stations 20 are provided with an SMS/MMS message controller (not shown) and an SMS/MMS message transmission driver to allow it to send message to a mobile phone 1 and to receive messages from a mobile phone 1.

The mobile switching centre 21 is connected to a data 22 switching node that connects the cellular communication network 16 with the data network 24. Different servers 25,26,27,28 described in more detail below, are connected to the data network.

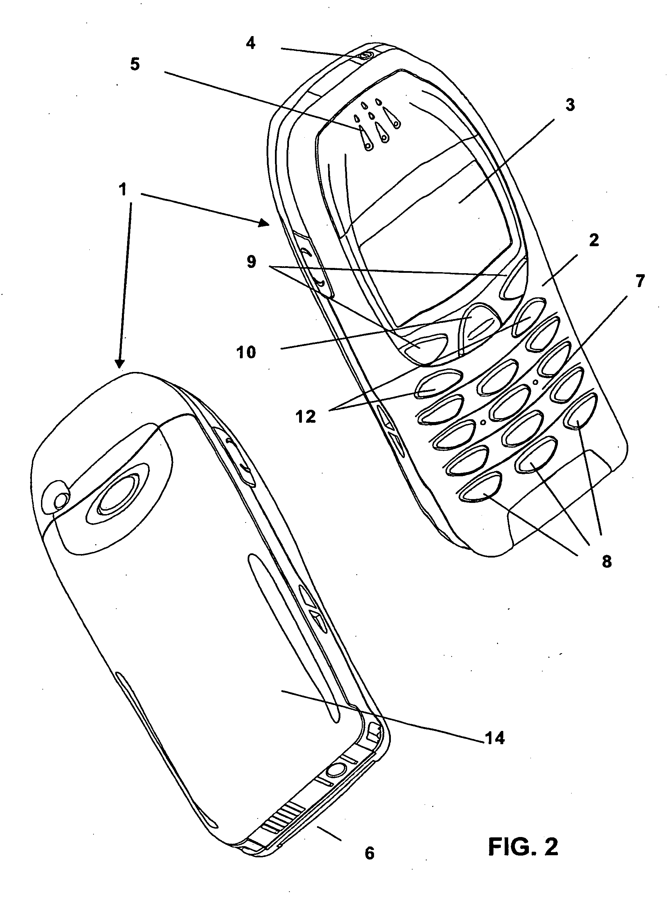

Fig. 2 shows a preferred embodiment of a mobile phone 1 according to the invention. The mobile phone 1, comprises a user interface having a keypad 2, a display 3, an on/off button 4 (present in the top of the phone) a speaker 5, and a microphone 6 (only the opening present in the bottom of the phone is visible). The mobile phone 1 according to the preferred embodiment is adapted for communication via a cellular network, such as the GSM 900/1800 MHz network, but could just as well be adapted for use with a Code Division Multiple Access (CDMA) network.

According to a preferred embodiment, the keypad 2 has a first group 7 of keys as alphanumeric keys, two softkeys 9, a cursor navigation key 10 (scroll up/down), and on-hook and off-hook keys 12. The present functionality of the softkeys 9 is shown in separate fields (softkey-labels) in the display 3 just above the softkeys 9. The softkeys 9 are multifunction keys and their present function depends on the state of the mobile phone 1. The softkeys 9 give access to the menu, the phonebook and call can activate actions related to call handling and message handling. A releasable battery pack 14 is placed on the rear side of the mobile phone 1.

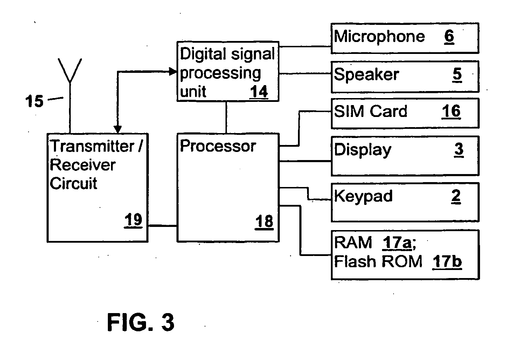

Fig. 3 schematically shows the most important components of a preferred embodiment of the mobile phone 1, said components being essential to the understanding of the invention. The processor 18 controls the communication with the network via the transmitter/receiver circuit 19 and an internal antenna 15.

The microphone 6 transforms the user's speech into analogue signals, the analogue signals formed thereby are A/D converted in an A/D converter (not shown) before the speech is encoded in a digital signal processing unit 14 (DSP). The encoded speech signal is transferred to the processor 18, which i.e. supports the GSM terminal software. The processor 18 also forms the interface to the peripheral units of the apparatus, including a RAM memory 17a and a Flash ROM memory 17b, a SIM card 16, the display 3 and the keypad 2 (as well as data, power supply, etc.). The DSP 14 speech-decodes the signal, which is transferred from the processor 18 to the speaker 5 via a D/A converter (not shown).

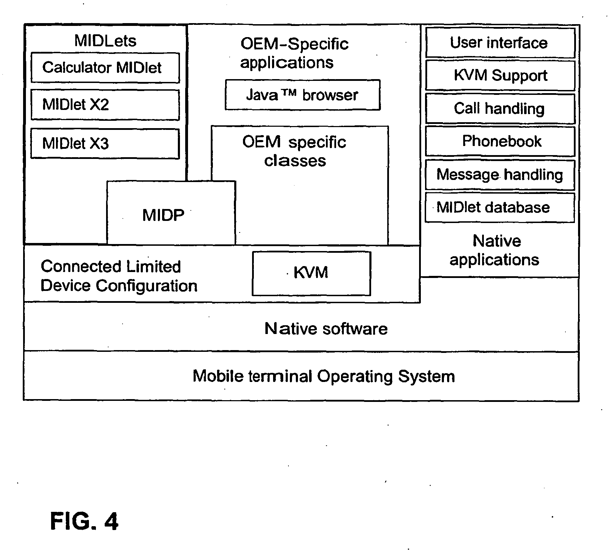

Fig. 4 illustrates the software architecture of the mobile phone 1. The software architecture comprises an operating system, in a preferred embodiment the Symbian^{™} 7.0 OS that provides the platform for the native software. The native software comprises a number of native applications of which a few can be mentioned: User interface, KVM support, a call handling, phone book, message handling and a MIDlet database. The listed native applications are, however, merely exemplary, there could be more as well as fewer native applications.

A Connected Limited Device Configuration (CLDC) provides the runtime environment for Java^{™} applications. CLDC is one of the most appropriate configurations for mobile phones available for Java^{™}, since it is tailored for devices with 160-512 KB memory battery powered, slow, possibly intermittent, connection.

The CLDC comprises a K Java^{™} Virtual Machine (KVM) and a set of libraries and Application Program Interfaces (APIs). The libraries and APIs are specified in the Mobile Information Device Profile (MIDP) sitting on top of the CLDC. The MIDP is a vertical extension of CLDC. Together they provide a run-time environment for Java^{™} Applets and MIDlets (MIDlet: an application written for the Mobile Information Device profile (MIDP)) on the mobile phone concerned.

The MIDlets are in code that is created by a Java^{™} compiler. This code can be run on any platform that has a KVM installed. A MIDlet will run the same in any KVM, regardless of the hardware and software underlying the system. The MIDLETS are therefore ideal for extending the functionality of mobile phones, also because their relatively small size renders them suitable for downloading to the phone. In the present embodiment, a calculator MIDlet and two other MIDlets X2 and X3 have been downloaded to the mobile phone 1. The MIDlets coexist with other applications on the mobile phone 1 such as the Original Equipment Manufacturer (OEM) Specific Applications. In the present embodiment a Java^{™} xhtml micro browser applet has been installed by the OEM.

The message handling application is capable of receiving, creating and sending text messages in the SMS standard (Short Message Service (SMS) part of the Global System for Mobile communications (GSM) digital standard - well known in the art). The message handling application may also be able to handle other message formats for exchanging information between mobile phones/servers such as the more recent MIME (Multipurpose Internet Mails Extensions) and MMS (Multimedia Messaging Service) standards. The message handling application may run in the native software or in an application run by the virtual machine.

The mobile phone 1 can send and receive data using the General Packet Radio Service (GRPS) for e.g. downloading MIDlets or other applications and is Wireless Application Protocol (WAP) enabled. A micro-browser written in Java^{™} is one of the OEM-specific applications.

The present invention provides for a new SMS message type in which the message header contains a MIDlet identifier and an address at which the identified MIDlet can be downloaded from a server that is connected to the wireless cellular network. This header is in addition the now-standard SMS header and the user data header. The message body contains the data to be used by the identified MIDlet. The new SMS message type will be referred to hereafter as a Java-message (J-SMS).

The syntax of the J-SMS in a preferred embodiment is as follows:

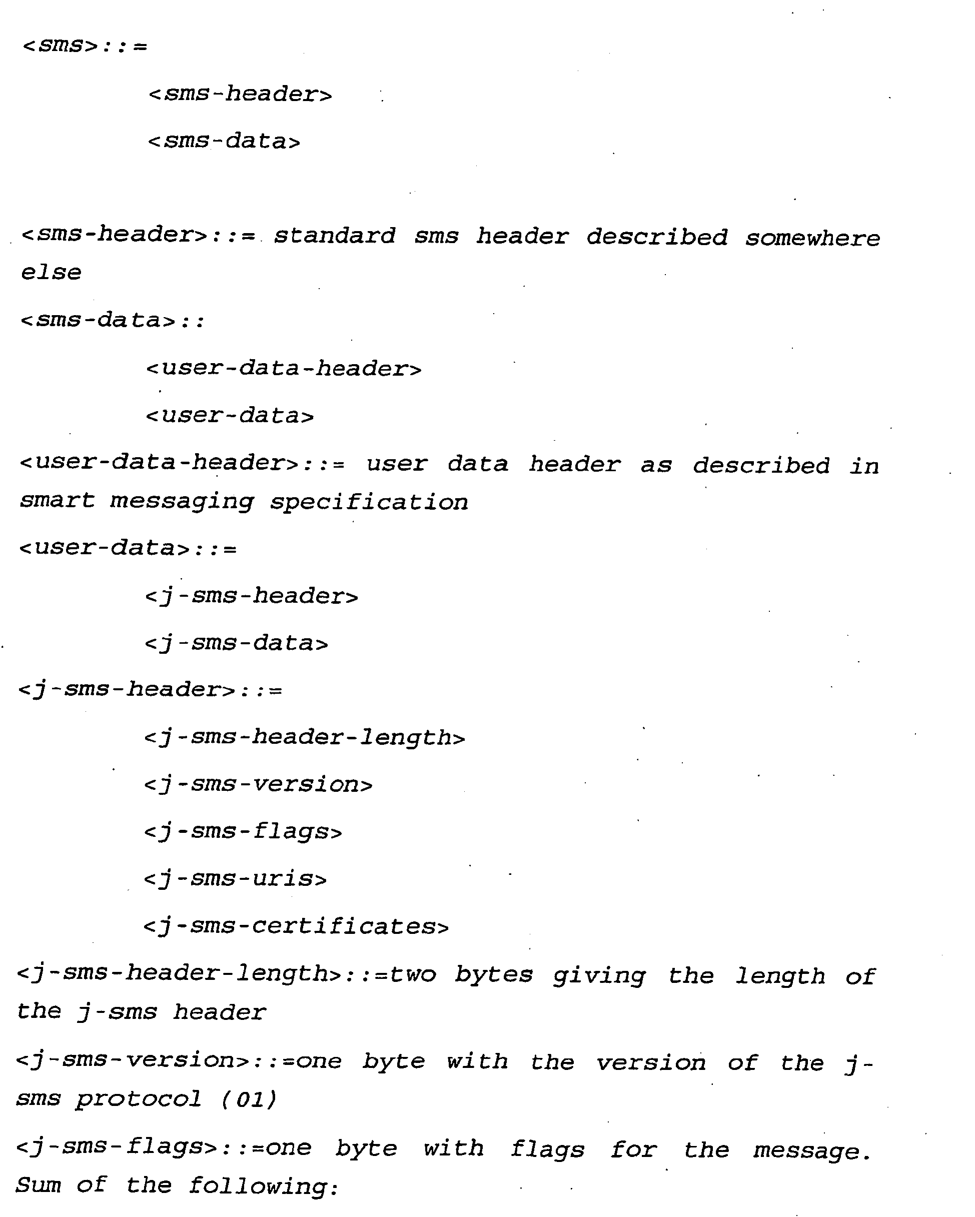

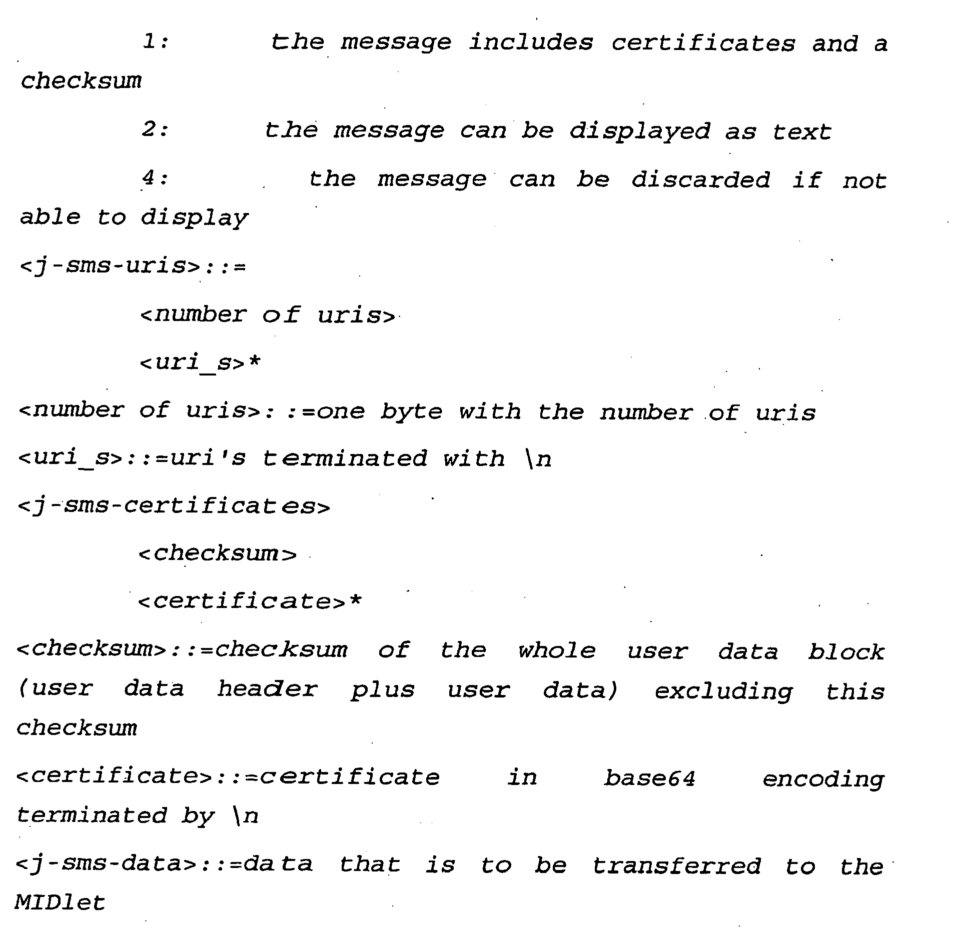

An example of a J-SMS in accordance with a preferred embodiment of the present invention in the form of an application port addressing scheme as defined in GSM 03.40 is listed below:

| **Octet Number** | **Value** | **Description** | |
|---|---|---|---|
| 1 | OB | Length of the User Data Header | |
| 2 | 05 | Information Element Identifier (IEI; application port addressing scheme, 16-bit port address) | |
| 3 | 04 | Information Element Data Length (IEDL) | |
| 4 - 5 | 2136 | Information Element Data (octets 4 & 5 → 2136 - destination port) | |
| 6 - 7 | 00 00 | Information Element Data (octets 6 & 7 → 0000 - originator port) | |
| 8 | 00 | Information Element Identifier (IEI; concatenated short message, 8-bit reference number) | |
| 9 | 03 | Information Element Data Length (IEDL; 3 octets) | |
| 10 | 01 | Information Element Data (concatenated short message reference number) | |
| 11 | 02 | Information Element Data (total number of concatenated messages (0-255)) | |
| 12 | 01 | Information Element Data (sequence number of current short message) | |
| 13 | 30 | MIDlet message version number. ISO-8859-1 character "0" | |
| 14 | 00 | Message flags where the following bits have the meaning: | |
| | | 1. | message includes certificate |
| | | 2. | message data can be displayed as text |
| | | 3. | message can be discarded if not able to display |
| | | 4. | reserved for future use. |
| 15 | 01 | Number of following URIs | |
| 16.. | "http://www .d2.de/gree tingcard.ja t" | The URI of the MIDlet used to display the content. Terminated by a newline (0x0A) character. | |
| .. | http:.//www. d2.de/greet ing/picture 1-JPg "Hi there, how are you doing ?". | MIDlet message data in a format defined only by the MIDlet. | |

The port number in octet 4-5 defines the SMS message type. The number used in this example is arbitrary and has not been reserved for the message type according to the present invention. Regular port numbers are reserved in the NBS port number space at the Internet Assigned Numbers Authority (IANA).

Octets 1 to 12 are in use in conventional SMS types, and for further information on their function reference is made to the GSM 03.40 specification, hereby incorporated by reference.

Octet 13 identifies the MIDlet message version number.

Octet 14 contains message flags where the following bits have the meaning:
1. message includes certificate
2. message data can be displayed as text
3. message can be discarded if not able to display
4. reserved for future use.

Octet 15 defines the number of Uniform Resource Identifiers (URIs) contained in the message. Octet 16 contains the first URI, followed by the message body with the data to be used by the identified MIDlet.
The message handling application detects the message type through the port number in octet 4-5. If the port number is (in present example) 2136 (HEX) the message is treated as a J-SMS. SMS messages with other port numbers in octet 4-5 are handled by the message handling application in the respective intended way, which is though not described here since this other types of the message handling are well known from e.g. the SMART MESSAGING SPECIFICATION, Revision 3.0.0, 2000-12-18, hereby incorporated by reference.

The MIDlet to be executed upon receipt of the message is defined by the URI in octet 16. The data to be used during the execution of the identified MIDlet is contained in the message body in the following octets. The data may comprise image files, formatted text files, audio files database files, or any other type of file executable on the terminal, or it may contain links to such files. Referring to the table, greeting card MIDlet identified in octet 16 is needed to display the greeting card which includes an image file and associated text. The greeting card image file "picture1.jpg" is provide by an identification of the URI "http://www.d2.de/greeting/picture1.jpg," and the accompanying text ."Hi there, how are you doing?" is provided as a text file within the message itself.

The following example illustrates the practical application of the J-SMS type messages. A first mobile subscriber A wishes to send his friend, mobile subscriber B, an e-postcard. Subscriber A visits the WAP-site of a postcard server 25 using the micro browser on his mobile phone 1. There, he selects the type of e-postcard to be sent, e.g. the graphics, accompanying tune, animation, font type, color, etc. The server 25 prompts subscriber A to enter a message text, that may or may not be used in combination with text integrated in the selected e-postcard. The server 25 also prompts subscriber A to enter the intended recipient's name and phone number. When the server 25 has received these data and an accept from subscriber A it sends a J-SMS to subscriber B. The header of the J-SMS contains an identifier for a postcard displaying MIDlet, and an address where the postcard displaying MIDlet can be downloaded from a server, in this case a MIDlet server 26, but it could just as well have been the postcard server 25. The URI serves as MIDlet identifier and as download address.

The postcard displaying MIDlet is an application that displays the postcard as selected and composed by subscriber A correctly on any mobile device with a Java^{™} Virtual Machine. The postcard contains text and may contain graphics, backgrounds, animations, music, etc.

The message body contains the data for the postcard displaying MIDlet.

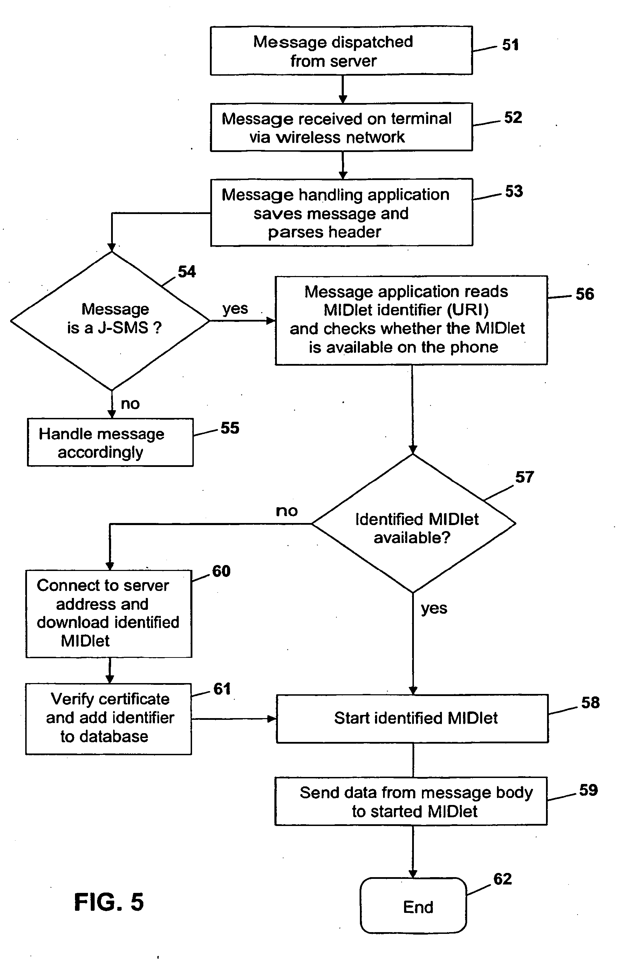

Fig. 5 is a flowchart that illustrates the procedure after dispatch of the J-SMS (step 51). Upon receipt of the J-SMS by the mobile phone 1 of subscriber B (step 52) the message handling application saves the message and examines the message header (step 53), parsing the message header for the information indicated in table above. Then, the message handling application determines the message type by checking the port number in octets 4-5 (step 54).

If the message is not a J-SMS, but e.g. a profile or a text message, the message handling application handles the message accordingly (step 55), as is well-known in the art and therefore not further explained here.

If the message handling application finds port number 2136 (HEX) in octet 4-5 the message is handled as a J-SMS. The message handling application reads the first URI included in the message. The URI serves as the MIDlet identifier. The mobile phone 1 maintains a small MIDlet database (one of the native applications) that lists the URIs of all the MIDlets that have been downloaded to the phone. The URI of OEM installed MIDlets is preferably also listed in the MIDlet database. The message handling application checks the MIDlet database for the presence of the URI included in the header (step 56).

After checking the MIDlet database, the message handling application can determine (step 57) if the identified MIDlet, in this example the postcard displaying MIDlet, is available on the mobile phone 1.

If the identified MIDlet is available, the message handling application starts the postcard displaying MIDlet (step 58). The message handling application then sends the data in the message body to the postcard displaying MIDlet (step 59) which uses it to display the postcard as selected and composed by subscriber A, including the image on the picture1.jpg file and the personal text "Hi there, how are you doing?" (step 59A in Figure 5).

If the URI identified MIDlet was not found in the MIDlet database in step 56, the message handling application connects e.g. via GPRS to the address in the URI at which the identified midlet can be downloaded and downloads the identified MIDlet. In this example the postcard displaying MIDlet is downloaded from the MIDlet server 26 (step 60). In the download request the message handling application may provide information about the requesting phone. The MIDlet sever 26 uploads the postcard handling MIDlet to the mobile phone 1.

Next, the message handling application adds the URI of the downloaded MIDlet to the MIDlet database and verifies that the certificate accompanying the MIDlet is signed and issued by an recognized certificate authority to ensure the integrity of the MIDlet (step 61).

A certificate issued by a recognized certificate authority is added to the signed MIDlet. The carrier, or the software developer, creates a signing-key pair and obtains a certificate from a recognized certificate authority. The carrier or developer computes a signature of the MIDlet suite JAR, then places that signature and the corresponding certificate in the application descriptor.

The signed MIDlet suite assures the user that the contents of the MIDlet suite have not been tampered with, and that the MIDlet suite comes from an trusted source. The MIDP implementation on the device can verify the identity of the developer by verifying the developer's signature. It can use the developer's public key added to the Java Application Descriptor (JAD) to verify the integrity of the MIDlet suite itself. For further details on the certification of MIDlets reference is made to the MIDP 2.0 specification (hereby incorporated by reference).

The MIDlet is then handled in accordance with the permission levels indicated in the certificate. The permissions may comprise allowed permissions and user permissions (the ones for which the user will be consulted). The permission levels are stepped in the following order: Network operators (highest level), OEM (mid level), signed but not by Network operator or OEM (lowest level). Depending on these levels the phone prompts for permission for sensitive operations to e.g. opening an HTTP connection, to delete or change phone numbers, etc.

After the certificate verification the message handling application starts the postcard displaying MIDlet (step 58), sends the data in the message body to the postcard displaying MIDlet (step 59) and the postcard is displayed.

The procedure can be repeated if subscriber B replies by sending an e-postcard back to subscriber A, a function that may be built into the postcard displaying application. Otherwise, the message handling application ends in step 62.

There can be more than one MIDlet identifier (URI) included in a single J-SMS. The message application will execute the identified MIDlets in the order in which they are listed in the J- SMS. In the above example the URI has been used both to identify the MIDlet and to provide the address at which the MIDlet can be downloaded. It is however possible to use a separate identifier and address. The MIDlet that is started by the J-SMS may also download further information or other data.

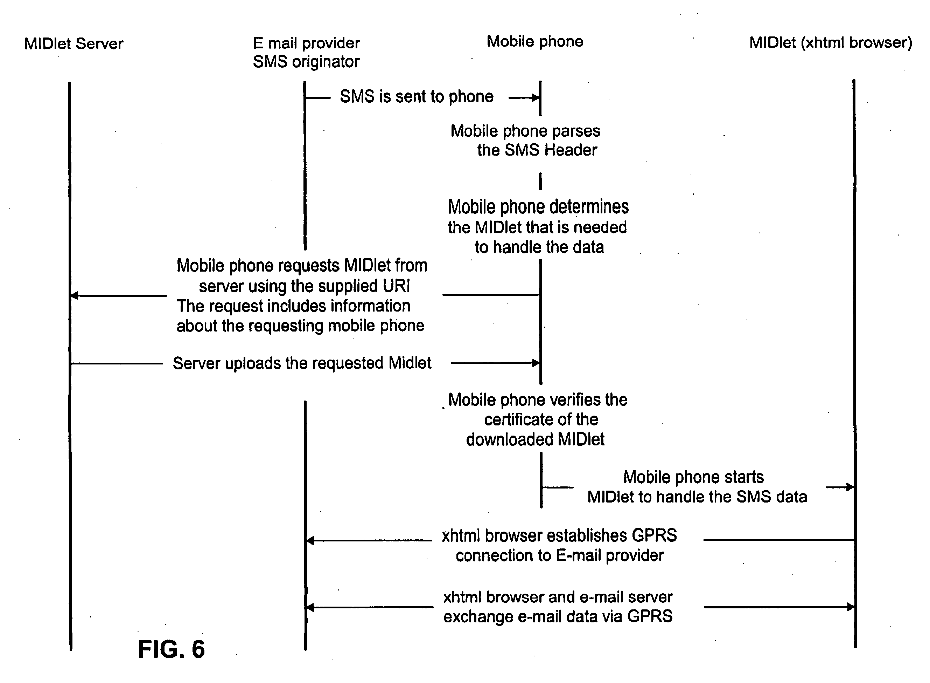

Another example of the use of the present invention is illustrated in Fig. 6 with the following scenario. An e-mail provider wishes to send e-mail messages to mobile subscribers. The standard SMS e-mail message is not sufficient for the operator's requirements because more features should be implemented e.g. starting an xhtml browser to read the e-mail, displaying the header of the new received e-mail, displaying the provider logo, showing an in-tray with received e-mails in every user's e-mail folder. After receipt of an e-mail intended for a mobile subscriber, the operator's e-mail server 27 sends a J-SMS that starts a MIDlet that displays the text "e-mail received" on the display of the mobile phone together with an audible notification and prompts the user if the e-mail should be opened. If the user affirms but the required enhanced e-mail MIDLET (an xhtml Java^{™} browser) is not installed on the user's mobile phone, the mobile phone requests a download of the enhanced e-mail MIDlet from the URI listed in the e-mail message, processes the download to install the enhanced e-mail MIDLET, and thereafter executes the enhanced e-mail MIDLET to process the e-mail data. The xhtml browser exchanges e-mail data via GPRS between the mobile phone 1 and the e-mail server 27 and displays the e-mail data. The xhtml browser operates as a sophisticated e-mail client that offers the user more flexibility and comfort than the simple e-mail displaying capacities of conventional SMS. The steps of requesting the MIDlet from the MIDlet server and the subsequent download as shown in Fig. 6 are bypassed if the xhtml browser MIDlet is already available on the mobile phone 1.

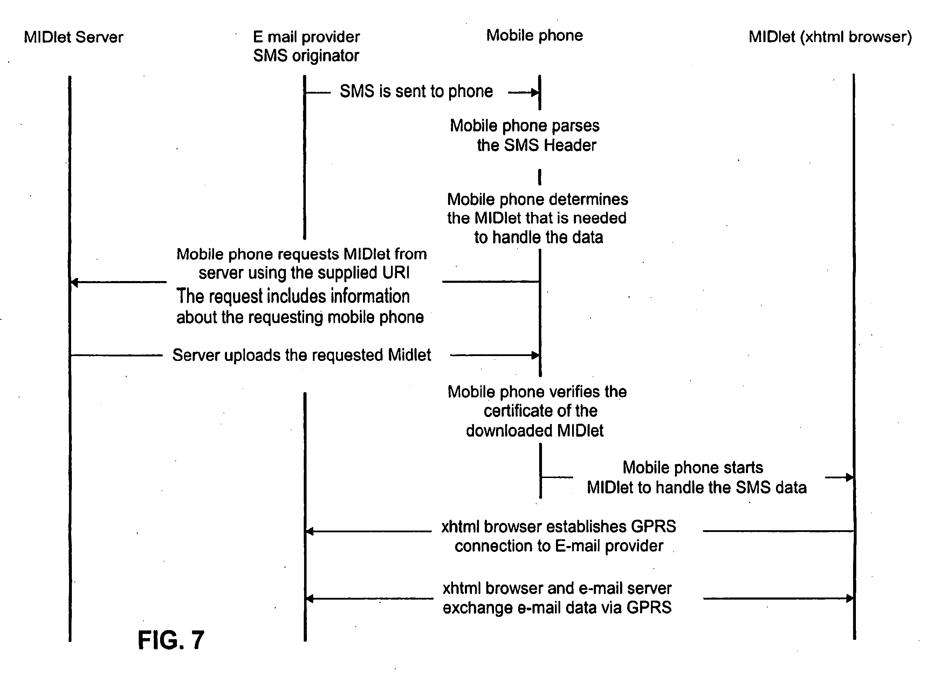

A further example of the use of the present invention is illustrated in Fig. 7 with the following scenario. A network operator wishes to offer a new service to its customers. This new service sends special offers from the operator's web-shop to the mobile phone of the customers. This service is realized by the provider sending J-SMSs including name, price and description (photo) of the offered items from its web-shop server (e.g., block 28 of Figure 1). The J-SMS includes an identifier of an advertisement displaying MIDlet that displays this information in a clean way, stores past offers for reference and allows the subscriber to order the items at the web-shop. The steps of requesting the MIDlet from the MIDlet server and the subsequent download as shown in Fig. 7 are bypassed if the advertisement displaying MIDlet is already available on the mobile phone 1.

The integrity verification does not need to be exclusively applied to the MIDlets, it can also be implemented in the J-SMS itself by adding a certificate from a recognized certificate authority and an encrypted checksum of the whole message to the J-SMS. The validity of the certificate can be verified by opening the signature with the public key that is included in the J-SMS. In this embodiment of the J-SMS the verification can be carried out before downloading the MIDlet concerned. Thus, some unnecessary downloads of uncertified MIDlets can be avoided.

As illustrated above, the messaging system provides a message format for use in a mobile phone system wherein Mobile phones are capable of running a variety of applications to process a variety of files, and are capable of running a message handling application for receiving messages. The message format comprises a header portion for identifying the message to the message handling application and a message data portion. The message data portion further comprises (1) a message data file portion which may optionally contain message text files, message images, message audio, message database files or the like, or identification of message files and locations from which said message files or the like may be downloaded to the phone, as desired by the originator of the message and (2) a message data header portion which contains an identification for any application needed in order to process files contained or identified in the message data file portion, and also contains information regarding locations from which said application may be downloaded to the phone. In addition, the message format may comprise a user data header according the SMS specification, and various other headers as dictated by the particular message contents.

Although the present invention has been described in detail for purpose of illustration, it is understood that such detail is solely for that purpose, and variations can be made therein by those skilled in the art without departing from the scope of the invention. The message type is not limited to the SMS standard, and may be implemented in MMS or EMS standards. The applications that are executed after receipt of a message do not need to be MIDlets, they could just as well be Java^{™} applets or other applications in platform independent code. The platform independent runtime environment does not need to be Java^{™} based, other runtime environments for platform independent code can be used. Thus, while the preferred embodiments of the devices and methods have been described in reference to the environment in which they were developed, they are merely illustrative of the principles of the inventions. Other embodiments and configurations may be devised without departing from the scope of the appended claims.

## Claims

1. A method of handling incoming messages received on a mobile communication terminal (1) via a wireless network (24), comprising the steps of:
providing a terminal (1) having native software with a virtual machine capable of executing platform independent object code,
receiving and storing a message that comprises a header and a message body, the header containing an identifier for an application in platform independent object code that can be executed by the virtual machine and wherein the header further contains an address at which the identified application can be downloaded from a server that is accessible through the wireless network (24),
analyzing the message header for the presence of an identifier for an application in platform independent object code,
verifying if the identified application is available on the terminal (1) and if not connecting the terminal (1) to the server at the address contained in the header and downloading the identified application when the identified application was not available on the terminal (1), and
starting the identified application when available on the terminal (1).

2. A method according to claim 1, wherein the message body contains data to be used by the identified application.

3. A method according to claim 2, wherein the message body contains greeting card data that is to be used by a greeting card displaying application identified in the header.

4. A method according to claim 2, wherein the message body contains phone number data that is to be used by a phonebook updating application identified in the header.

5. A method according to claim 2, wherein the message body contains e-mail data that is to be used by an e-mail displaying application identified in the header.

6. A method according to any of claims 1 to 5, wherein the platform independent object code is Java^{™}, preferably in the Java^{™} 2, Micro Edition format.

7. A method according to any of claims 1 to 5, wherein the virtual machine is a Java Virtual Machine, preferably a K Virtual Machine^{™}, KVM.

8. A method according to any of claims 1 to 5, wherein the identified application is a MIDlet.

9. A method according to any of claims 1 to 5, further comprising the step of verifying the certification of the identified application.

10. A mobile communication terminal (1) for operation with a wireless network (24), the terminal (1) having:
native software,
a virtual machine capable of executing platform independent object code,
a message handling application in the native software or in an application under the virtual machine, the message handling application being capable of sending and receiving messages via the wireless network (24), and
the message handling application being programmed to analyze the message header of a received message for the presence of an identifier for an application in platform independent object code,
and said message handling application being programmed to start an application written in the independent object code when a corresponding identifier is contained in the header of the received message and wherein the message handling application is programmed to download the identified application from a server that is accessible via the wireless network (24) at an address contained in the header when the identified application is not already available on the terminal (1).

11. A mobile communication terminal (1) according to claim 10, wherein the platform independent object code is Java^{™}, preferably in the Java^{™} 2, Micro Edition format.

12. A mobile communication terminal (1) according to claim 11, wherein the virtual machine is a Java^{™} Virtual Machine, preferably a K Virtual Machine^{™}, KVM.

13. A mobile communication terminal (1) according to any of claims 10 to 12 wherein the identified application is a MIDlet.

14. A mobile communication terminal (1) according to any of claims 10 to 12, wherein the message handling application is programmed to verify the certification of the downloaded application.

15. A mobile communication terminal (1) according to any of claims 10 to 12, wherein the message application is programmed to send the data in the message body to the identified application.

16. A mobile communication terminal (1) according to any of claims 10 to 12, further comprising an application identifier database listing the identifiers of all the applications in platform independent object code that are available on the terminal (1).

17. A message for transmission through a wireless network (24) to a mobile communication terminal (1), the terminal (1) having native software and a virtual machine capable of executing applications in platform independent object code, the message having a syntax comprising:
a header part, and
a message body part,
the header containing an identifier for an application in platform independent object code to be executed by the virtual machine on the mobile communication terminal (1) that receives the message, and an address at which the identified application can be downloaded from a server that is accessible through the wireless network (24).

18. A message according to claim 17, wherein the message header contains a URI that serves as identifier and contains the address at which the identified application can be downloaded from a server.

19. A message according to any of claims 18, wherein the message body contains data to be used by the identified application.

20. A message according to claim 17 or 18, wherein the message is an SMS message with a port address in octets 4-5 that identifies it as a message containing an identifier for an application to be started upon receipt of the message.

21. A message according to claim 17 or 18, wherein the identified application is a Java^{™} applet or a MIDlet, preferably in the Java^{™} 2, Micro Edition, Mobile Information Device Profile, MIDP, format.

22. A message according to claim 17 or 18, further containing a signed certificate issued by a recognized certification authority that includes a public key from the signatory.

23. A method of enabling an application in platform independent object code to be run on a mobile communication terminal (1) comprising the steps of:
sending a message from a server via the wireless network (24) to the mobile communication terminal (1) that is provided with a virtual machine capable of executing applications in platform independent object code, the message containing:
a header with an identifier for the application to be executed by the virtual machine and an address at which the identified application can be obtained from a server that is accessible through the wireless network (24), and
a message body with the data to be used by the identified application.

24. A method according to claim 23, further comprising the step of:
uploading the identified application to the mobile communication terminal (1) when the mobile terminal (1) connects to the server at the address contained in the header.

25. A method according to claim 24, wherein the server that uploads the identified application is not the same as the server sending the message.

26. A method according to claim 24, wherein the uploaded application is a MIDLet, preferably in the Java^{™} 2, Micro Edition, Mobile Information Device Profile, MIDP, format.

## Patentansprüche

1. Verfahren zur Handhabung eingehender Nachrichten, die auf einem Mobilkommunikationsendgerät (1) über ein drahtloses Netzwerk (24) empfangen werden, umfassend die Schritte:
- Versehen eines Endgeräts (1), das native Software aufweist, mit einer virtuellen Maschine, die in der Lage ist, plattformunabhängigen Objektcode auszuführen;
- Empfangen und Speichern einer Nachricht, die einen Nachrichtenkopf und einen Nachrichtenkörper umfasst, wobei der Nachrichtenkopf einen Bezeichner für eine Anwendung in plattformunabhängigem Objektcode enthält, der von der virtuellen Maschine ausgeführt werden kann, und wobei der Nachrichtenkopf weiter eine Adresse enthält, an der die bezeichnete Anwendung von einem Server heruntergeladen werden kann, der durch das drahtlose Netzwerk (24) zugänglich ist;
- Analysieren des Nachrichtenkopfes in Bezug auf das Vorhandensein eines Bezeichners für eine Anwendung in plattformunabhängigem Objektcode;
- Verifizieren, ob die bezeichnete Anwendung auf dem Endgerät (1) verfügbar ist, und falls nicht, Verbinden des Endgeräts (1) mit dem Server an der Adresse, die in dem Nachrichtenkopf enthalten ist, und Herunterladen der bezeichneten Anwendung, wenn die bezeichnete Anwendung nicht auf dem Endgerät (1) verfügbar war; und
- Starten der bezeichneten Anwendung bei Verfügbarkeit auf dem Endgerät (1).

2. Verfahren nach Anspruch 1, wobei der Nachrichtenkörper Daten zur Verwendung durch die bezeichnete Anwendung enthält.

3. Verfahren nach Anspruch 2, wobei der Nachrichtenkörper Grußkartendaten zur Verwendung durch eine Anwendung zur Anzeige von Grußkarten enthält, die in dem Nachrichtenkopf bezeichnet ist.

4. Verfahren nach Anspruch 2, wobei der Nachrichtenkörper Telefonnummemdaten zur Verwendung durch eine Anwendung zur Aktualisierung eines Telefonbuchs enthält, die in dem Nachrichtenkopf bezeichnet ist.

5. Verfahren nach Anspruch 2, wobei der Nachrichtenkörper Emaildaten zur Verwendung durch eine Anwendung zur Anzeige von Emails enthält, die in dem Nachrichtenkopf bezeichnet ist.

6. Verfahren nach einem der Ansprüche 1 bis 5, wobei der plattformunabhängige Objektcode Java^{™} ist, vorzugsweise in dem Java^{™} 2 Micro Edition Format.

7. Verfahren nach einem der Ansprüche 1 bis 5, wobei die virtuelle Maschine eine Java Virtual Machine ist, vorzugsweise eine K Virtual Machine^{™}, KVM.

8. Verfahren nach einem der Ansprüche 1 bis 5, wobei die bezeichnete Anwendung ein MIDlet ist.

9. Verfahren nach einem der Ansprüche 1 bis 5, weiter umfassend den Schritt des Verifizierens der Zertifizierung der bezeichneten Anwendung.

10. Mobilkommunikationsendgerät (1) zum Betrieb mit einem drahtlosen Netzwerk (24), wobei das Endgerät (1) aufweist:
- native Software;
- eine virtuelle Maschine, die in der Lage ist, plattformunabhängigen Objektcode auszuführen;
- eine Nachrichtenhandhabungsanwendung in der nativen Software oder in einer Anwendung unterhalb der virtuellen Maschine, wobei die Nachrichtenhandhabungsanwendung in der Lage ist, Nachrichten über das drahtlose Netzwerk (24) zu senden und zu empfangen; und
- wobei die Nachrichtenhandhabungsanwendung programmiert ist, den Nachrichtenkopf einer empfangenen Nachricht in Bezug auf das Vorhandensein eines Bezeichners für eine Anwendung in plattformunabhängigem Objektcode zu analysieren;
- und wobei die Nachrichtenhandhabungsanwendung programmiert ist, eine Anwendung zu starten, die in dem unabhängigen Objektcode geschrieben ist, wenn ein entsprechender Bezeichner in dem Nachrichtenkopf der empfangenen Nachricht enthalten ist, und wobei die Nachrichtenhandhabungsanwendung programmiert ist, die bezeichnete Anwendung von einem Server, der über das drahtlose Netzwerk (24) zugänglich ist, an einer Adresse herunterzuladen, die in dem Nachrichtenkopf enthalten ist, wenn die bezeichnete Anwendung nicht bereits auf dem Endgerät (1) verfügbar ist.

11. Mobilkommunikationsendgerät (1) nach Anspruch 10, wobei der plattformunabhängige Objektcode Java^{™} ist, vorzugsweise in dem Java^{™} 2 Micro Edition Format.

12. Mobilkommunikationsendgerät (1) nach Anspruch 11, wobei die virtuelle Maschine eine Java^{™} Virtual Machine ist, vorzugsweise eine K Virtual Machine^{™}, KVM.

13. Mobilkommunikationsendgerät (1) nach irgendeinem der Ansprüche 10 bis 12, wobei die bezeichnete Anwendung ein MTDlet ist.

14. Mobilkommunikationsendgerät (1) nach irgendeinem der Ansprüche 10 bis 12, wobei die Nachrichtenhandhabungsanwendung programmiert ist, die Zertifizierung der heruntergeladenen Anwendung zu verifizieren.

15. Mobilkommunikationsendgerät (1) nach irgendeinem der Ansprüche 10 bis 12, wobei die Nachrichtenanwendung programmiert ist, die Daten in dem Nachrichtenkörper an die bezeichnete Anwendung zu senden.

16. Mobilkommunikationsendgerät (1) nach irgendeinem der Ansprüche 10 bis 12, weiter umfassend eine Anwendungsbezeichner-Datenbank, welche die Bezeichner aller Anwendungen in plattformunabhängigem Objektcode auflistet, die auf dem Endgerät (1) verfügbar sind.

17. Nachricht zur Übertragung durch ein drahtloses Netzwerk (24) an ein Mobilkommunikationsendgerät (1), wobei das Endgerät (1) native Software und eine virtuelle Maschine aufweist, die in der Lage ist, Anwendungen in plattformunabhängigem Objektcode auszuführen, wobei die Nachricht eine Syntax aufweist, umfassend:
- einen Nachrichtenkopf-Teil; und
- einen Nachrichtenkörper-Teil;
- wobei der Nachrichtenkopf einen Bezeichner für eine Anwendung in plattformunabhängigem Objektcode zur Ausführung durch die virtuelle Maschine auf dem Mobilkommunikationsendgerät (1), das die Nachricht empfängt, und eine Adresse enthält, an der die bezeichnete Anwendung von einem Server heruntergeladen werden kann, der durch das drahtlose Netzwerk (24) zugänglich ist.

18. Nachricht nach Anspruch 17, wobei der Nachrichtenkopf eine URI enthält, die als ein Bezeichner dient und die Adresse enthält, an der die bezeichnete Anwendung von einem Server heruntergeladen werden kann.

19. Nachricht nach Anspruch 18, wobei der Nachrichtenkörper Daten zur Verwendung durch die bezeichnete Anwendung enthält.

20. Nachricht nach Anspruch 17 oder 18, wobei die Nachricht eine SMS-Nachricht mit einer Port-Adresse in 4-5 Oktetten ist, die sie als eine Nachricht bezeichnet, die einen Bezeichner für eine Anwendung enthält, die beim Empfang der Nachricht zu starten ist.

21. Nachricht nach Anspruch 17 oder 18, wobei die bezeichnete Anwendung ein Java^{™} Applet oder ein MIDlet ist, vorzugsweise in dem Java^{™} 2 Micro Edition, Mobile Information Device Profile, MIDP, Format.

22. Nachricht nach Anspruch 17 oder 18, weiter enthaltend ein signiertes Zertifikat, das von einer anerkannten Zertifizierungsautorität herausgegeben wird, das einen öffentlichen Schlüssel von dem Unterzeichner aufweist.

23. Verfahren, um es zu ermöglichen, dass eine Anwendung in plattformunabhängigem Objektcode auf einem Mobilkommunikationsendgerät (1) ausgeführt wird, umfassend die Schritte:
- Senden einer Nachricht von einem Server über das drahtlose Netzwerk (24) an das Mobilkommunikationsendgerät (1), das mit einer virtuellen Maschine versehen ist, die in der Lage ist, Anwendungen in plattformunabhängigem Objektcode auszuführen, wobei die Nachricht enthält:
- einen Nachrichtenkopf mit einem Bezeichner für die Anwendung, die von der virtuellen Maschine auszuführen ist, und eine Adresse, an der die bezeichnete Anwendung von einem Server erhalten werden kann, der durch das drahtlose Netzwerk (24) zugänglich ist; und
- einen Nachrichtenkörper mit den Daten, die von der bezeichneten Anwendung zu verwenden sind.

24. Verfahren nach Anspruch 23, weiter umfassend den Schritt:
- Hochladen der bezeichneten Anwendung auf das Mobilkommunikationsendgerät (1), wenn das Mobilendgerät (1) sich mit dem Server an der in dem Nachrichtenkopf enthaltenen Adresse verbindet.

25. Verfahren nach Anspruch 24, wobei der Server, der die bezeichnete Anwendung hochlädt, nicht derselbe ist wie der Server, der die Nachricht sendet.

26. Verfahren nach Anspruch 24, wobei die hochgeladene Anwendung ein MIDlets ist, vorzugsweise in dem Java^{™} 2 Micro Edition, Mobile Information Device Profile, MIDP, Format.

## Revendications

1. Procédé pour traiter des messages entrants reçus sur un terminal de communication mobile (1) par l'intermédiaire d'un réseau sans fil (24), comportant les étapes ci-dessous consistant à :
délivrer, à un terminal (1) présentant un logiciel natif, une machine virtuelle en mesure d'exécuter un code exécutable indépendant d'une plateforme,
recevoir et stocker un message qui comporte un en-tête et un corps de message, l'en-tête contenant un identifiant destiné à une application à code exécutable indépendant d'une plateforme qui peut être exécutée par la machine virtuelle, et dans lequel l'en-tête contient en outre une adresse à laquelle l'application identifiée peut être téléchargée à partir d'un serveur qui est accessible via le réseau sans fil (24)
analyser l'en-tête de message pour rechercher un identifiant destiné à une application à code exécutable indépendant d'une plateforme,
vérifier si l'application identifiée est disponible sur le terminal (1), et si non connecter le terminal (1) au serveur à l'adresse contenue dans l'en-tête et télécharger l'application identifiée lorsque l'application identifiée n'était pas disponible sur le terminal (1) et
initier l'application identifiée lorsque celle-ci est disponible sur le terminal (1).

2. Procédé selon la revendication 1, dans lequel le corps de message contient des données qui sont destinées à être utilisées par l'application identifiée.

3. Procédé selon la revendication 2, dans lequel le corps de message contient des données de carte de veux qui sont destinées à être utilisées par une application d'affichage de cartes de voeux identifiée dans l'en-tête.

4. Procédé selon la revendication 2, dans lequel le corps de message contient des données de numéros de téléphone qui sont destinées à être utilisées par une application de mise à jour de répertoire téléphonique identifiée dans l'en-tête.

5. Procédé selon la revendication 2, dans lequel le corps de message contient des données de courriels qui sont destinées à être utilisées par une application d'affichage de courriels identifiée dans l'en-tête.

6. Procédé selon l'une quelconque des revendications 1 à 5, dans lequel le code exécutable indépendant d'une plateforme est le code Java^{™}, de préférence le code Java^{™} 2 au format Micro Edition.

7. Procédé selon l'une quelconque des revendications 1 à 5, dans lequel la machine virtuelle est une machine virtuelle Java, de préférence une machine « K Virual Machine^{™}, KVM ».

8. Procédé selon l'une quelconque des revendications 1 à 5, dans lequel l'application identifiée est une application MIDlet.

9. Procédé selon l'une quelconque des revendications 1 à 5, comportant en outre l'étape consistant à vérifier la certification de l'application identifiée.

10. Terminal de communication mobile (1) destiné à être exploité avec un réseau sans fil (24), le terminal (1) comportant :
un logiciel natif,
une machine virtuelle en mesure d'exécuter un code exécutable indépendant d'une plateforme,
une application de traitement de messages dans le logiciel natif ou dans une application de la machine virtuelle, l'application de traitement de messages étant apte à envoyer et à recevoir des messages via le réseau sans fil (24), et
l'application de traitement de messages étant programmée pour analyser l'en-tête de message d'un message reçu à la recherche de la présence d'un identifiant pour une application à code exécutable indépendant d'une plateforme,
et ladite application de traitement de messages étant programmée pour initier une application écrite dans le code exécutable indépendant lorsqu'un identifiant correspondant apparaît dans l'en-tête du message reçu et dans lequel l'application de traitement de messages est programmée pour télécharger l'application identifiée à partir d'un serveur qui est accessible via le réseau sans fil (24) à une adresse contenue dans l'en-tête lorsque l'application identifiée n'est pas déjà disponible sur le terminal (1).

11. Terminal de communication mobile (1) selon la revendication 10, dans lequel le code exécutable indépendant d'une plateforme est le code Java^{™}, de préférence le code Java^{™} 2 au format Micro Edition.

12. Terminal de communication mobile (1) selon la revendication 11, dans lequel la machine virtuelle est une machine virtuelle Java^{™}, de préférence une machine « K Virual Machine^{™}, KVM ».

13. Terminal de communication mobile (1) selon l'une quelconque des revendications 10 à 12, dans lequel l'application identifiée est une application MIDlet.

14. Terminal de communication mobile (1) selon l'une quelconque des revendications 10 à 12, dans lequel l'application de traitement de messages est programmée pour vérifier la certification de l'application téléchargée.

15. Terminal de communication mobile (1) selon l'une quelconque des revendications 10 à 12, dans lequel l'application de message est programmée pour envoyer les données dans le corps de message à l'application identifiée.

16. Terminal de communication mobile (1) selon l'une quelconque des revendications 10 à 12, comportant en outre une base de données d'identifiants d'applications répertoriant les identifiants de toutes les applications à code exécutable indépendant d'une plateforme qui sont disponibles sur le terminal (1).

17. Message destiné à être transmis par l'intermédiaire d'un réseau sans fil (24) à un terminal de communication mobile (1), le terminal (1) présentant un logiciel natif et une machine virtuelle apte à exécuter des applications à code exécutable indépendant d'une plateforme, le message ayant une syntaxe comportant :
une partie d'en-tête, et
une partie de corps de message,
l'en-tête contenant un identifiant pour une application à code exécutable indépendant d'une plateforme à exécuter par la machine virtuelle sur le terminal de communication mobile (1) qui reçoit le message, et une adresse à laquelle l'application identifiée peut être téléchargée à partir d'un serveur qui est accessible via le réseau sans fil (24).

18. Message selon la revendication 17, dans lequel l'en-tête de message comporte un identifiant URI qui sert d'identifiant et contient l'adresse à laquelle l'application identifiée peut être téléchargée à partir d'un serveur.

19. Message selon la revendication 18, dans lequel le corps de message contient des données destinées à être utilisées par l'application identifiée.

20. Message selon la revendication 17 ou 18, dans lequel le message est un message court SMS avec une adresse de port dans les octets 4 - 5 qui l'identifie en tant qu'un message contenant un identifiant pour une application à initier lors de la réception du message.

21. Message selon la revendication 17 ou 18, dans lequel l'application identifiée est un applet Java^{™} ou un MIDlet, de préférence au format Java^{™} 2, Micro Edition, Mobile Information Device Profile, MIDP.

22. Message selon la revendication 17 ou 18, comportant en outre un certificat signé délivré par une autorité de certification reconnue lequel inclut une clé publique du signataire.

23. Procédé pour permettre à une application à code exécutable indépendant d'une plateforme d'être exécutée sur un terminal de communication mobile (1), comportant les étapes ci-dessous consistant à :
envoyer un message d'un serveur via le réseau sans fil (24) au terminal de communication mobile (1) qui est équipé d'une machine virtuelle apte à exécuter des applications à code exécutable indépendant d'une plateforme, le message comportant :
un en-tête avec un identifiant pour que l'application soit exécutée par la machine virtuelle, et une adresse à laquelle l'application identifiée peut être obtenue à partir d'un serveur qui est accessible via le réseau sans fil (24), et
un corps de message avec les données destinées à être utilisées par l'application identifiée.

24. Procédé selon la revendication 23, comportant en outre l'étape consistant à :
télécharger l'application identifiée vers le terminal de communication mobile (1) lorsque le terminal mobile (1) se connecte au serveur à l'adresse contenue dans l'en-tête.

25. Procédé selon la revendication 24, dans lequel le serveur qui télécharge l'application identifiée n'est pas le même que le serveur envoyant le message.

26. Procédé selon la revendication 24, dans lequel l'application téléchargée est un MIDlet, de préférence au format Java^{™} 2, Micro Edition, Mobile Information Device Profile, MIDP.
